# EUROPÄISCHE PATENTANMELDUNG

(11) **EP 1 892 157 A2**
(43) Veröffentlichungstag der Anmeldung: **27.02.2008**
(21) Anmeldenummer: 07112132.1
(22) Anmeldetag: 10.07.2007
(51) Int. Cl.: B60R 16/02, B60R 25/00, F02D 41/26

(54) **Steuergerät für ein Kraftfahrzeug und Verfahren zum Betrieb eines Steuergeräts für ein Kraftfahrzeug**

(30) Priorität: 23.08.2006 DE 102006039584
(71) Anmelder: ROBERT BOSCH GMBH, 70442 Stuttgart (DE)
(72) Erfinder: Maur, Marcel, 70839, Gerlingen (DE)

(57) **Zusammenfassung**

Es wird ein Steuergerät für ein Kraftfahrzeug bzw. ein Verfahren zum Betrieb eines Steuergeräts für ein Kraftfahrzeug vorgeschlagen, wobei das Steuergerät in Abhängigkeit von einer Energieversorgung des Steuergeräts eine Kennung über eine Schnittstelle erhält. Das Steuergerät speichert die Kennung dauerhaft ab und wird in Abhängigkeit von dieser Kennung betrieben.

## Beschreibung

### Stand der Technik

Die Erfindung betrifft ein Steuergerät für ein Kraftfahrzeug bzw. ein Verfahren zum Betrieb eines Steuergeräts für ein Kraftfahrzeug nach der Gattung der unabhängigen Patentansprüche.

Aus DE 198 05 969 C1 ist es bekannt über einen Bus über das Übertragen von Kennungen zu einem Zentralsteuergerät eine Authentifizierung der einzelnen Steuergeräte vorzunehmen. Dabei ist die codierte Kennung in jedem Steuergerät gespeichert oder wird mit Hilfe eines gespeicherten mathematischen Algorithmus dort erzeugt.

### Offenbarung der Erfindung

Das erfindungsgemäße Steuergerät für ein Kraftfahrzeug bzw. das erfindungsgemäße Verfahren zum Betrieb eines Steuergeräts für ein Kraftfahrzeug mit den Merkmalen der unabhängigen Patentansprüche haben demgegenüber den Vorteil, dass durch das Bereitstellen der Kennung durch das Fahrzeug bei einem Betrieb des Fahrzeugs eine Automatisierung erreicht wird, die gemäß der Lehre des Stands der Technik nicht erreicht wird. Gemäß des Stands der Technik müssen die Kennungen insbesondere unterschiedlich sein, was gemäß der erfindungsgemäßen Lehre nicht notwendig ist. Durch die erfindungsgemäße Übernahme der Kennung oder des Identitätscodes verschmilzt die Software des Steuergeräts mit der Software des übrigen Kraftfahrzeugs. Damit wird auf einfache Art und Weise der Schwarzmarkt, insbesondere für Airbagsteuergeräte, deutlich geschwächt. Passende Steuergeräte könnten erfindungsgemäß nur durch autorisierte Fachwerkstätten, die ein vom Hersteller geliefertes Airbagsteuergerät besitzen, einbauen. Die erfindungsgemäße Lehre nutzt vorteilhafter Weise die Vernetzung von Steuergeräten im Kraftfahrzeug. Auch das Vorhandensein eines dauerhaften Speichers in einem Steuergerät ist üblicherweise gegeben. Damit erfordert die erfindungsgemäße Lehre lediglich das Hinzufügen von entsprechender Software auf die vorhandene Hardware kann zurückgegriffen werden. Damit wird die Funktion, die durch die erfindungsgemäße Lehre möglich ist, in einfacher und kostengünstiger Art und Weise implementierbar. Ebenso ist im Steuergerät kein Applikationsaufwand bezüglich der Implementierung der erfindungsgemäßen Lehre notwendig.

Durch die in den abhängigen Ansprüchen aufgeführten Maßnahmen und Weiterbildungen sind vorteilhafte Verbesserungen des in den unabhängigen Patentansprüchen angegebenen Steuergeräts für ein Kraftfahrzeug bzw. Verfahren zum Betrieb eines Steuergeräts für ein Kraftfahrzeug möglich.

Besonders vorteilhaft ist, dass die Schnittstelle, über die die Kennung erhalten wird, ein CAN-Controller ist. Solche CAN-Controller sind üblicherweise in den Steuergeräten für die Vernetzung vorhanden.

Vorteilhafter Weise erhält das Steuergerät die Kennung bei der erstmaligen Energieversorgung. D. h. das Steuergerät ist beim Einbau in einem freien Modus und weist noch keine Kennung auf. Beim erstmaligen Betrieb erkennt das Steuergerät, dass es noch keine Kennung aufweist und übernimmt die Kennung, die dem Steuergerät zum Vergleich geliefert wird. Diese Kennung wird dann dauerhaft in einem Speicher, beispielsweise einem EEPROM abgespeichert. Diese Kennung wird dann wie die folgenden Vergleiche bei jedem Systemstart, also dem Start des Kraftfahrzeugs, verwendet. Dies kann beispielsweise durch das Betätigen der Zündung, durch den Fahrer signalisiert werden.

Es ist weiterhin vorteilhaft, dass die Kennung dann für einen Vergleich verwendet wird und der Betrieb in Abhängigkeit von diesem Vergleich weitergeführt wird. Ist der Vergleich positiv, stimmt also die abgespeicherte Kennung mit der empfangenen Kennung überein, dann kann der Betrieb in der vorgesehenen Weise fortgesetzt werden. Ist der Vergleich jedoch negativ, kann vorteilhafter Weise eine Warneinrichtung, wie einer Warnlampe oder einer Anzeige betätigt werden, und es kann zusätzlich oder anstatt eine Deaktivierung zumindest des Steuergeräts erfolgen, gegebenenfalls sogar des ganzen elektronischen Systems des Kraftfahrzeugs und damit des Kraftfahrzeugs im Ganzen.

Ausführungsbeispiele der Erfindung sind in der Zeichnung dargestellt und werden in der nachfolgenden Beschreibung näher erläutert.

Es zeigen:
- Figur 1: ein Blockschaltbild mit dem erfindungsgemäßen Steuergerät und
- Figur 2: ein Flussdiagramm des erfindungsgemäßen Verfahrens.

Zunehmend problematisch ist der Diebstahl von Kraftfahrzeugen mit dem Verkauf der Komponenten der gestohlenen Kraftfahrzeuge. Zu diesen Komponenten zählen auch Steuergeräte, wie insbesondere Airbagsteuergeräte. Eine unsachgemäße Verbindung eines solchen Steuergeräts mit einem neuen Kraftfahrzeug kann insbesondere beim Airbagsteuergerät zu Verletzungen durch einen unsachgemäßen Betrieb führen.

Erfindungsgemäß wird durch eine Verschmelzung der Software des Steuergeräts mit der Software des Fahrzeugs durch die Übernahme einer Kennung aus der Software des Fahrzeugs ein solches kriminelles Verhalten frustriert. Das erfindungsgemäße Steuergerät wird vom Hersteller in einem freien Modus ausgeliefert. Beim erstmaligen Betrieb kann vorzugsweise dann die Kennung vom Kraftfahrzeug in das Steuergerät übernommen werden. Das Kraftfahrzeug kann beispielsweise in der Wegfahrsperre eine solche Kennung für andere Steuergeräte bevorraten. Die Verbindung kann beispielsweise über den bekannten CAN-Bus erfolgen. Die so erhaltene Kennung oder Identitätscode wird dann dauerhaft in einem Speicher des Steuergeräts abgespeichert, um für spätere Vergleiche zur Verfügung zu stehen. Doch auch bei Airbags kann diese erfindungsgemäße Methode verwendet werden, wenn diese mit einem Airbagsteuergerät kommunizieren. Vorraussetzung ist, dass die Airbags eine entsprechende Speichereinrichtung aufweisen. Auf Airbags können auch Labels oder sogenannte RFID's vorgesehen sein, um das Stehlen auch solcher Komponenten als sinnlos zu gestalten.

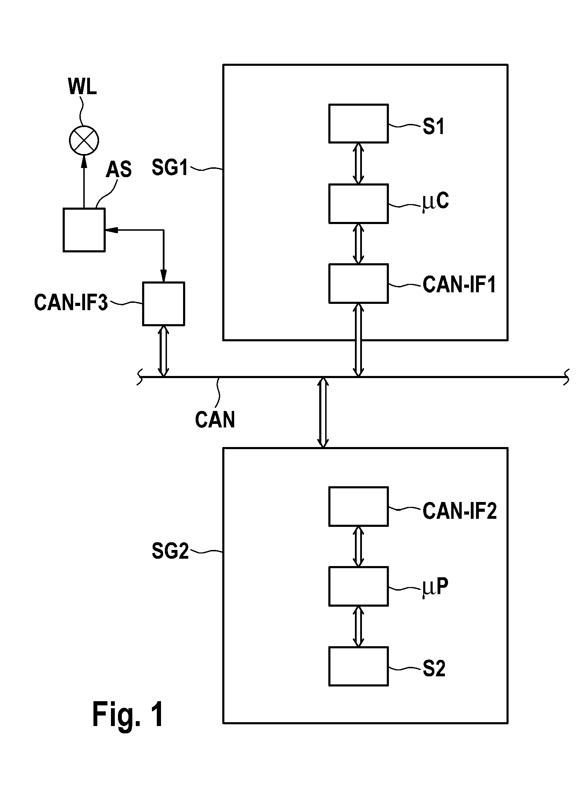

Figur 1 zeigt in einem Blockschaltbild einen Ausschnitt eines Kraftfahrzeugelektroniksystem mit einem erfindungsgemäßen Steuergerät SG1. In den hier dargestellten Steuergeräten sind lediglich die für die Funktion der Erfindung notwendigen Komponenten dargestellt. Weitere für den Betrieb des Steuergeräts, beispielsweise eines Airbagsteuergeräts notwendigen Komponenten sind der Einfachheit halber weggelassen worden. Das erfindungsgemäße Steuergerät SG1 ist über seine Schnittstelle CAN-IF1 mit einem CAN-Bus CAN bidirektional verbunden. Die Schnittstelle CAN-IF1 ist hier als integrierter Schaltkreis vorgesehen. Es kann jedoch auch vorgesehen sein, dass diese zumindest teilweise diskret aufgebaut ist. Die Schnittstelle CAN-IF1 ist über einen zweiten Datenein-/ausgang mit einem Mikrocontroller µC im Steuergerät verbunden. Damit ist es möglich, Daten von und zum Mikrocontroller µC zu übertragen. Der Mikrocontroller µC ist seinerseits mit einem Speicher S1 verbunden, der eine dauerhafte Abspeicherung von Daten ermöglicht. An den CAN-Bus ist hier beispielhaft noch ein weiteres Steuergerät SG2 über dessen Schnittstelle CAN-IF2 angeschlossen. Diese Schnittstelle CAN-IF2 ist mit einer weiteren bidirektionalen Datenverbindung mit einem Mikroprozessor µP im Steuergerät SG2 verbunden, wobei auch dieser Mikroprozessor µP über einen weiteren Datenein-/ausgang mit einem Speicher S2 verbunden ist, der eine dauerhafte Speicherung von Daten ermöglicht. Beispielhaft ist das Steuergerät SG1 ein Airbagsteuergerät, wenn das Steuergerät SG2 eine Wegfahrsperre ist. An den CAN-Bus CAN ist jedoch hier weiterhin über eine Schnittstelle CAN-IF3 eine Ansteuerschaltung AS angeschlossen, die eine Warnlampe WL ansteuert.

Weitere Steuergeräte sind an den CAN-Bus CAN anschließbar, ebenso kann ein anderes Bussystem oder Kommunikationssystem verwendet werden. Anstatt eines Mikrocontrollers µC oder des Mikroprozessors µP sind andere Auswertebausteine möglich.

Anstatt einer Warnlampe können auch andere Anzeigevorrichtungen, wie die eines Bordcomputers oder eines Navigationsgeräts eines Headup-Displays oder anderer möglicher Anzeigevorrichtungen angesteuert werden.

Nachdem das Steuergerät SG1 eingebaut wurde und die anderen Komponenten bereits eingebaut sind, wird das Kraftfahrzeug durch die Betätigung der Zündung betrieben. Dies führt beim Systemstart nunmehr dazu, dass dem Steuergerät SG1 von dem Steuergerät SG2 über den CAN-Bus, der als Multimasterbus ausgeführt ist, eine Kennung übertragen wird. Diese Kennung wird aus dem Speicher S2 vom Mikroprozessor µP geladen und dann zur Schnittstelle CAN-IF2 übertragen, die über den CAN-Bus CAN diese Kennung zum Steuergerät SG1 überträgt. Dazu werden die für den CAN-Bus üblichen Übertragungsmechanismen verwendet. Das Steuergerät SG1 empfängt dann über die Schnittstelle CAN-IF1 die Kennung und übermittelt diese zum Mikrocontroller µC. Der Mikrocontroller µC prüft, ob er bereits eine Kennung im Speicher S1 aufweist, wenn nicht, dann wird diese Kennung verwendet und dauerhaft im Speicher S1 abgespeichert. Diese Speicherung kann dann noch besonders verriegelt werden, so dass ein Zurücksetzen des Speichers S1 nicht möglich ist. Auch eine Verschlüsselung dieser Speicherung ist möglich. Es ist möglich, dass der Mikrocontroller µC automatisch den Erstbetrieb des Steuergeräts SG1 erkennt und damit automatisch die Kennung im Speicher S1 dauerhaft hinterlegt. Im folgenden Betrieb, beispielsweise beim erneuten Systemstart, erhält erneut das Steuergerät SG1 vom Steuergerät SG2 in der beschriebenen Weise die Kennung und vergleicht nun diese erhaltene Kennung mit der abgespeicherten Kennung im Speicher S1. Wurde das Steuergerät SG1 dann zwischenzeitlich in einem anderen Fahrzeug eingebaut, das dann eine andere Kennung aufweist, führt dies dazu, dass der Mikrocontroller µC erkennt, dass eine Übereinstimmung der Kennungen nicht vorliegt, so dass der Mikrocontroller µC beispielsweise über den CAN-Bus CAN eine Systemdeaktivierung und eine Ausgabe einer Warnung an den Fahrer hervorruft. Dies wird dadurch erreicht, dass eine Nachricht an die Schnittstelle CAN-IF3 übertragen wird, wobei dann in Abhängigkeit von dieser Nachricht die Ansteuerschaltung AS die Warnlampe WL betätigt. Es ist anstatt oder zusätzlich möglich, dass das Steuergerät SG1 nicht zu einer kompletten Deaktivierung aller Komponenten führt, sondern lediglich zur Deaktivierung des Steuergeräts SG1 führt und dies dann über die Ausgabe oder die Warnlampe WL ausgegeben wird. Dann kann eine störungsfreie Funktion des Steuergeräts SG1 nur erreicht werden, wenn ein neues Steuergerät eingebaut wird, das noch in einem freien Modus betrieben werden kann, also noch keine Kennung aufweist oder durch einen Ausbau des Speichers S1.

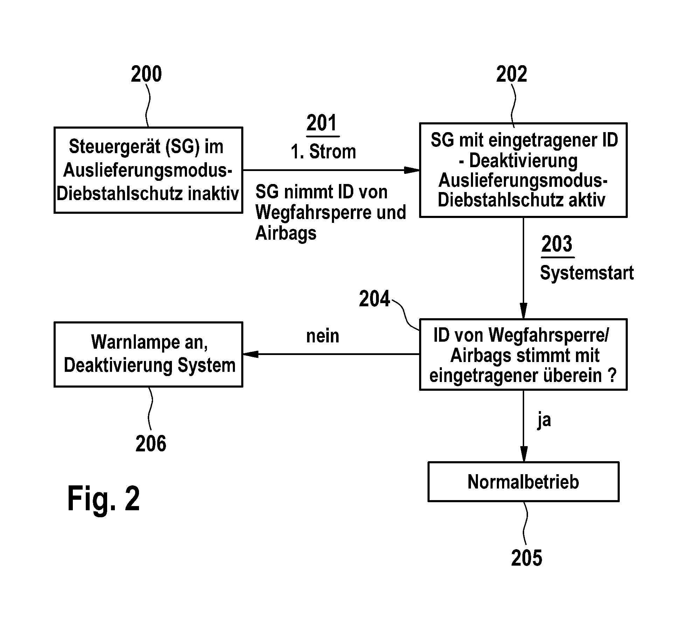

Figur 2 erläutert in einem Flussdiagramm die Funktionsweise des erfindungsgemäßen Verfahrens. In Verfahrensschritt 200 ist das Steuergerät SG1 im freien Modus, also ohne Diebstahlschutz, im Kraftfahrzeug eingebaut. In Verfahrensschritt 201 wird es erstmalig mit einer Energieversorgung, also mit Strom, durch das Kraftfahrzeug versorgt. Dann erhält das Steuergerät SG1 vom Steuergerät SG2 die Kennung, beispielsweise von der Wegfahrsperre oder auch von den Airbags. Das Steuergerät SG1 kann dann in Verfahrensschritt 202 die Kennung dauerhaft im Speicher S1 abspeichern. Bei einem erneuten Systemstart 203 wird in Verfahrensschritt 204 die eingetragene Kennung mit einer nunmehr erneut empfangenen Kennung verglichen. Stimmen diese Kennungen überein, kann in Verfahrensschritt 205 der Normalbetrieb des Steuergeräts aufgenommen werden. Stimmen diese Kennungen jedoch nicht überein, dann kann in Verfahrensschritt 206 die Warnlampe WL aktiviert werden bzw. eine Deaktivierung entweder des Steuergeräts SG1 oder des Gesamtsystems erfolgen.

## Patentansprüche

1. Steuergerät (SG) für ein Kraftfahrzeug, wobei das Steuergerät (SG) derart konfiguriert ist, dass das Steuergerät (SG) in Abhängigkeit von einer Energieversorgung über eine Schnittstelle (CAN-IF1) eine Kennung erhält und diese Kennung dauerhaft abspeichert, wobei das Steuergerät (SG) in Abhängigkeit von der Kennung betrieben wird.

2. Steuergerät nach Anspruch 1, **dadurch gekennzeichnet, dass** die Schnittstelle (CAN-IF1) ein CAN-Controller ist.

3. Steuergerät nach Anspruch 1 oder 2, **dadurch gekennzeichnet, dass** das Steuergerät (SG) derart konfiguriert ist, dass das Steuergerät (SG) bei jedem Betrieb zuerst die abgespeicherte Kennung mit einer empfangenen Kennung vergleicht und in Abhängigkeit von diesem Vergleich den Betrieb fortsetzt.

4. Steuergerät nach Anspruch 3, **dadurch gekennzeichnet, dass** das Steuergerät (SG) derart mit einer Warneinrichtung (WL) verbindbar ist, dass das Steuergerät (SG) die Warneinrichtung (WL) in Abhängigkeit von diesem Vergleich ansteuert.

5. Steuergerät nach Anspruch 3 oder 4, **dadurch gekennzeichnet, dass** das Steuergerät (SG) derart konfiguriert ist, dass das Steuergerät (SG) in Abhängigkeit von dem Vergleich eine Deaktivierung zumindest des Steuergeräts (SG) vornimmt.

6. Verfahren zum Betrieb eines Steuergeräts (SG1) für ein Kraftfahrzeug, wobei das Steuergerät (SG1) in Abhängigkeit von einer Energieversorgung des Steuergeräts (SG1) eine Kennung über eine Schnittstelle (CAN-IF1) erhält, wobei das Steuergerät (SG1) die Kennung dauerhaft abspeichert und das Steuergerät (SG1) in Abhängigkeit von dieser Kennung betrieben wird.

7. Verfahren nach Anspruch 6, **dadurch gekennzeichnet, dass** das Steuergerät (SG1) die Kennung bei der erstmaligen Energieversorgung erhält.

8. Verfahren nach Anspruch 6 oder 7, **dadurch gekennzeichnet, dass** das Steuergerät (SG1) derart betrieben wird, dass die abgespeicherte Kennung mit einer empfangenen Kennung verglichen wird und der Betrieb in Abhängigkeit von diesem Vergleich durchgeführt wird.

9. Verfahren nach Anspruch 8, **dadurch gekennzeichnet, dass** eine Warneinrichtung (WL) in Abhängigkeit von dem Vergleich angesteuert wird.

10. Verfahren nach Anspruch 8 oder 9, **dadurch gekennzeichnet, dass** in Abhängigkeit von dem Vergleich zumindest das Steuergerät (SG1) deaktiviert wird.
